# EUROPÄISCHE PATENTSCHRIFT

(11) **EP 2 093 864 B1**
(45) Veröffentlichungstag und Bekanntmachung des Hinweises auf die Patenterteilung: **26.02.2014**
(21) Anmeldenummer: 08022246.6
(22) Anmeldetag: 22.12.2008
(51) Int. Cl.: H02K 5/167, H02K 7/14

(54) **Maschine mit direkt angetriebenem Drehkörper**
Machine with directly driven rotating body
Machine dotée d'un corps rotatif à entraînement direct

(30) Priorität: 22.12.2007 DE 102007062383
(43) Veröffentlichungstag der Anmeldung: 26.08.2009
(73) Patentinhaber: Robert Bosch GmbH, 70469 Stuttgart (DE)
(72) Erfinder: Gröning, Ingolf, 97816 Lohr am Main (DE)
(74) Vertreter: Thürer, Andreas

(56) Entgegenhaltungen:
- DE-A1- 4 315 826
- DE-A1- 19 706 124
- DE-A1- 19 726 017
- DE-A1-102005 035 834

## Beschreibung

Die Erfindung betrifft eine Maschine mit direkt angetriebenem Drehkörper.

Direktantriebe sind aus vielen Bereichen der elektrischen Automatisierungstechnik bekannt. Direktantriebe findet man beispielsweise in der Drucktechnik in Verbindung mit dem Antrieb von Druckzylindern, aber auch bei anderen Maschinen, wie Spritzgießmaschinen und Antrieben für Extruderschnecken. Mittels der Direktantriebstechnik wird nicht nur wertvoller Montageraum eingespart, sondern auch der Wartungsaufwand reduziert, da technisch aufwändige Riemen und Zahngetriebe entfallen können. Koppelt man den Rotor des Direktantriebes an die anzutreibende Maschinenwelle direkt an, so muss das Gewicht des Antriebes mittels des Maschinengehäuses abgefangen werden. Man befestigt das Gehäuse des Direktantriebes hierzu in der Regel an der Maschine und den Rotor des Direktantriebes an der anzutreibenden Maschinenwelle, so dass die Rotationsachse des Direktantriebes eine Verlängerung der Rotationsachse der Maschinenwelle darstellt.

Aus der DE 197 26 017 A1 ist eine Maschine in Form eines Pumpenantriebs bekannt, welcher eine Wandung aufweist. Weiter sind ein Drehkörper und Mittel zur Realisierung eines elektrischen Antriebs des Drehkörpers vorgesehen. Dieses Mittel ist ein elektrischer Motor mit einem als Hohlwelle ausgebildeten Rotor, der mit dem Drehkörper drehsteif verbunden ist. Ein derartiges Antriebsprinzip ist für eine Druckmaschine von vorne herein ungeeignet, da der Drehkörper nicht entlang seiner Drehachse relativ zur Wandung längsverstellbar ist.

Die Erfindung schlägt eine Maschine vor, insbesondere eine Druckmaschine, mit einer Wandung und wenigstens einem Drehkörper, insbesondere einem Zylinder oder einer Walze oder einer Rasterwalze, welcher Drehkörper entlang seiner Drehachse relativ zur Wandung der Maschine längsverstellbar ist, wobei ein Mittel zur Realisierung eines direkten elektrischen Antriebes für den Drehkörper vorgesehen ist. Erfindungsgemäß wird das Mittel mittels eines elektrischen Motors mit einem als Hohlwelle ausgebildeten Rotor realisiert. Der Rotor des Motors ist mit dem Drehkörper drehsteif verbunden, so dass sich eine gemeinsame Drehachse ergibt. Das Motorgehäuse wird an der Wandung der Maschine angeordnet, wobei der Rotor mittels eines Loslagers am Motorgehäuse gelagert ist, dass der Drehkörper und der Rotor gleichzeitig eine gemeinsame Längsverstellbewegung ausführen können. Die erfindungsgemäße Maschine unterstützt zwei unterschiedliche Längsverstellbewegungen. Die erste Längsverstellbewegung dient der Feinjustierung des Drehkörpers in Längsrichtung (z.B. in Verbindung mit einer Registerregelung bei Druckmaschinen) und die zweite Längsverstellbewegung dient der Arretierung des Drehkörpers für Montagezwecke und/oder Wartungsarbeiten. Die erste mögliche Längsverstellbewegung ist Betragsmäßig kleiner als die zweite Längsverstellbewegung, so dass während des normalen Produktionsbetriebs der Maschine nur die Feinjustierung möglich ist.

Die Erfindung hat den Vorteil, dass sich aufgrund unterschiedlicher Ausdehnungskoeffizienten der verwendeten Materialien für die Druckmaschine und den Direktantrieb oder aufgrund geringfügiger Toleranzen, insbesondere bei starken Temperaturschwankungen, diese Toleranzen nicht mehr derartig ungünstig aufsummieren können, dass die verwendeten Lager für die rotierenden Teile über die üblichen Maßen hinaus beansprucht werden und vorzeitig ausfallen können. Die Erfindung beugt einem möglicherweise durch einen Lagerschaden verursachten Stillstand der Maschine und den damit verbundenen hohen Kosten für den Maschinenbetreiber vor. Auch die Wartungskosten für Maschine und Motor können mittels der Erfindung reduziert werden.

Bei Maschinen, insbesondere Druckmaschinen, liegen die Achsen eng beieinander und die Motoren sind im Durchmesser begrenzt, so dass die Ausdehnung der Motoren in Längsrichtung vergrößert werden muss. Je enger die Achsen beieinander liegen, desto kompakter kann die Druckmaschine realisiert werden. Außerdem können alle Antriebe, auch bei kleinen Maschinen auf eine Seite gebaut werden. Die Erfindung ermöglicht insbesondere den Anbau von langen Motoren an Druckwalzen von Druckmaschinen und die damit einhergehenden Vorteile.

Bei Druckmaschinen wird eine Druckwalze in das Druckmaschinengehäuse in der Regel von oben eingeführt. Um die Druckwalze anzutreiben und teilweise auch um sie zu lagern, werden seitliche Zapfen die Druckwalzen angebracht, an die weitere Komponenten (Lagerung, Antrieb, Einführung von Prozessluft, Flüssigkeiten etc) anschließbar sind.
Hierbei tritt häufig das Problem einer unzureichenden Führung der Wellen auf, beispielsweise bei Verwendung mehrteiliger Wellen. Die Erfindung trägt zur Verbesserung der Lagerung auch von mehrteiligen Wellen bei.

Der Hohlwellenrotor und der Stator sind koaxial zueinander und koaxial zur gemeinsamen Drehachse innerhalb des Motorgehäuses angeordnet, wobei das Motorgehäuse mittels einer als Anschlussflansch ausgebildeten ersten Motorgehäuseabdeckung an der Wandung der Maschine angeordnet ist. Der Anschlussflansch dient einerseits als Abdeckung für den Motorinnenraum und erleichtert andererseits die Montage des Motors. Das Motorgehäuse ist mittels des Anschlussflansches steif mit der Maschine verkoppelt, wodurch das Gewicht des Motors von der Maschine vollständig getragen werden kann.

Bei langen Wellen, welche beispielsweise aus der steifen Verkopplung eines Drehkörpers und eines Rotors gebildet sein können (z.B. direkt angetriebene Druckmaschinenzylinder), treten häufig Taumelbewegungen an den Wellenenden auf. An einem Ende der Welle ist motorseitig in der Regel eine Drehzahlerfassung oder Lageerfassung unter Verwendung beispielsweise einer Signalgebereinheit angeordnet. Die Signalgebereinheit liefert ihre Signale an eine Antriebseinheit zur Regelung des Motors. Die Antriebseinheit selbst kann wiederum mittels einer Maschinensteuerung bedient werden.

Es wird nun erfindungsgemäß ein erstes Lagermittel zur Realisierung einer Drehung des Hohlwellenrotors um die eigene Drehachse an der dem Anschlussflansch bzw. der Maschinenwandung gegenüberliegenden Seite des Motors angeordnet (B-Seite des Motors). Das Ende der langen Welle ist damit radial fixiert, wodurch Taumelbewegungen vorgebeugt werden kann. Diese Taumelbewegungen können radiale Schläge und/oder Vibrationen verursachen, welche auf den am Wellenende angeordneten Signalgeber einwirken und ihn beschädigen können. Da die Erfindung aufgrund der Lagerung der Welle diesen Taumelbewegungen vorbeugt, können nun handelsübliche Signalgeber (Inkrementalgeber, Lagegeber) verwendet werden und es kann auf teure Speziallösungen verzichtet werden. Auch wird mittels der erfindungsgemäßen Lösung-stets gewährleistet, dass der Luftspalt zwischen dem Hohlwellenrotor und dem Stator des Motors weitestgehend gleichmäßig bleibt und damit Leistungseinbußen verringert werden bzw. vermieden werden.

Vorzugsweise ist am Anschlussflansch eine zentrale Ausnehmung vorgesehen, wobei die Ausnehmung und/oder der Hohlwellenrotor Mittel umfasst, welche ein zweites Lagermittel zur Arretierung des Hohlwellenrotors am Motorgehäuse bilden können. Das Lagermittel ist derart ausgebildet, dass der Hohlwellenrotor in radialer Richtung mittels axialer Verschiebung innerhalb der Ausnehmung längsverstellbar und/oder zentrierbar ist. Für den Betrieb der Maschine genügt somit die Verwendung nur ein einziges Rotorwellenlagers innerhalb ihres Direktantriebs. Im Auslieferzustand der einzelnen Maschinenkomponenten (Direktantrieb, Maschinenteile), etc. kann die Rotorwelle mittels des Rotorwellenlagers und mittels der oben genannten Zentriermöglichkeit derart innerhalb des Motorgehäuses gehalten werden, dass die auf der Hohlwelle angeordneten Magnet beim Transport des Direktantriebes nicht beschädigt werden (Aufrechterhaltung des Luftspaltes). Die mechanische Zentrierung wird erst dann durch axiales Verschieben des Motorgehäuses gelöst, wenn die Hohlwelle an der Maschinenwelle angeflanscht ist. Das Lösen der Zentrierung kann dann automatisch zu dem Zeitpunkt erfolgen, zu dem das Motorgehäuse in axialer Richtung der Maschinenwandung angenähert wird. An der Maschinenwandung kann das Motorgehäuse anschließend mittels einer Verschraubung oder anderer Befestigungsmittel sicher fixiert werden. Der Zentriermechanismus ist derartig ausgelegt, dass die Motorwelle im demontierten Zustand stets sicher an zwei voneinander entfernten Lagerpunkten fixiert wird und im montierten Zustand innerhalb des Motors nur mittels einer einzigen Lagerstelle und zusätzlich mittels der Maschinenwelle gelagert wird.

Die Abstützung des Rotorgewichtes erfolgt im Auslieferzustand am Motorgehäuse und nicht am Stator des Rotors, was Störungen oder Leistungseinbußen beim Betrieb der Maschine nach der Montage vorbeugt. Im montierten Zustand erfolgt die Abstützung des Rotorgewichtes teilweise am Motorgehäuse (erstes Lagermittel) und teilweise an einer Maschinenkomponente (z.B. Maschinenwelle). Es ist damit sowohl im demontierten als auch im montierten Zustand der Druckmaschine stets gewährleistet, dass der luftspalt zwischen Rotor und Stator im wesentlichen gleichmäßig erhalten bleibt. Die Montage und/oder Demontage, beispielsweise bei einem Standortwechsel der Druckmaschine oder sonstige an der Maschine anfallende Arbeiten können mittels der Erfindung beschleunigt und erleichtert werden.

Besonders bevorzugt handelt es sich bei den Mitteln zur Realisierung des zweiten Lagermittels um Führungsmittel, welche eine mechanische Führung bilden, wobei die Führungsmittel zur Realisierung der Führung am Hohlwellenrotor und an der Ausnehmung des Anschlussflansches derart angeordnet sind, dass diese im Sinne einer axialen Führung und radialen Arretierung zusammenwirken. Diese zentrale Arretierung kann bei axialer Bewegung des Hohlwellenrotors greifen. Die erfindungsgemäße Art der Rotorführung erleichtert die Herstellung einer mechanisch einfach zu realisierenden axialen Beweglichkeit des Rotors, so dass Abhängig vom Hub der Bewegung eine automatische Zentrierung der Rotorwelle mittels des Motorgehäuse und auch eine Längsverstellbarkeit des Rotors während des Maschinenbetriebs realisierbar ist.

Vorzugsweise ist der Hohlwellenrotordurchmesser im Bereich des zweiten Lagermittels mit einer zumindest teilweise umlaufenden konischen Durchmessererweiterung und der Ausnehmungsdurchmesser mit einer zumindest teilweise umlaufenden konischen Durchmesserreduzierung versehen. Diese sich gegenüberliegenden ringförmigen Strukturen können bei axialer Verschiebung des Rotors eine Klemmverbindung zwischen Rotor und Anschlussflansch bewirken. Die Durchmessererweiterung bzw. Durchmesserreduzierung erfolgt möglichst stufenlos, beispielsweise durch Abschrägungen, welche als Höhenausgleich zwischen beiden Durchmessern dienen. Aufgrund dieser Abschrägung, welche die konische Form der Durchmessererweiterung bzw. der Durchmesserreduzierung bewirken, kann der Rotor leicht gleitend entlang der Abschrägung verschoben werden. Das Verschieben ist nur möglich bis zu demjenigen Bereich, bei dem der Durchmesser der Erweiterung und der Durchmesser der Reduzierung im wesentlich identisch sind, wodurch eine Klemmwirkung entsteht, welche den Rotor sowohl in radialer Richtung als auch durch Reibschluss bedingt in axialer Richtung fixiert. Die Toleranzen sind hierbei derart bemessen, dass der Hohlwellenrotor zwar für den Transport sicher fixiert ist (Reibschluss), im Rahmen der Montage jedoch stets axial und in Rotationsrichtung beweglich bleibt. Die hierfür aufzuwendenden Kräfte müssen so gering sein, dass diese von einem Monteur aufgebracht werden können, andererseits müssen die hierfür aufzuwendenden Kräfte jedoch so hoch sein, dass eine sichere Arretierung beim Transport stets gewährleistet ist.

Die Durchmessererweiterung und die Durchmesserreduzierung ist derart realisiert, dass bei axialer Bewegung des Hohlwellenrotors in Richtung des Anschlussflansches eine Fixierung des Hohlwellenrotors in radialer Richtung realisierbar ist, wobei die Toleranzen derart bemessen sind, dass der Hohlwellenrotor auch bei Fixierung ohne mechanische Hilfsmittel beweglich bleibt. Spezialwerkzeug für die Herstellung der Arretierung ist nicht erforderlich.

Vorzugsweise umfasst der Anschlussflansch Befestigungsmittel, welche von Seiten der Wandung und/oder von Seiten des Motorgehäuses zugänglich sind und mittels welcher der Motor an der Wandung angeordnet ist. Ebenso umfasst der Hohlwellenrotor Befestigungsmittel zur Befestigung des Hohlwellenrotors an dem Drehkörper, wobei die Befestigungsmittel von Seiten des Motors, insbesondere mittels einer rohrförmigen und/oder koaxialen Öffnung am Hohlwellenrotor, zugänglich sind und wobei der Hohlwellenrotor mittels dieser Befestigungsmittel an dem Drehkörper angeordnet ist. In beiden Fällen wird damit die Montage der Maschine erleichtert und beschleunigt.

Das Lagermittel für den Hohlwellenrotor ist als Loslager realisiert, vorzugsweise mit einem Außenring, der in einem Zwischenlager drehfest lagert, wobei das Zwischenlager in einem Einbauraum des Motorgehäuses oder einem Motorflansch angeordnet sein kann. Zusätzlich ist ein Innenring vorhanden, welcher mit dem Hohlwellenrotor drehfest verbunden ist. Es ist auch eine Arretierung umfasst, welche eine Relativbewegung in Umlaufrichtung zwischen Motorgehäuse/Motorflansch und Zwischenlager hemmt und eine Relativbewegung zwischen Motorgehäuse/Motorflansch und Zwischenlager entlang der Rotationsachse der Hohlwelle zulässt. Mittels dieser Lösung wird ein Festsetzen des Lagers zur Vermeidung der bereits zuvor genannten Taumelbewegungen in radialer Richtung bzw. in Umlaufrichtung bewirkt, während eine Beweglichkeit in axialer Richtung zur Kompensation von Längenänderungen des umlaufenden Maschinenteils durch Wärmeeinwirkungen verhindert wird. Wesentlich hierbei ist, dass die Axialbewegung nicht zwischen dem umlaufenden Maschinenteil und der Innenring des Lagers, sondern zwischen dem Motorgehäuse und dem Zwischenlager stattfindet. Damit ist eine starre Verbindung zwischen dem umlaufenden Maschinenteil und dem Innenring stets gewährleistet. Das Loslager ist relativ einfach und kostengünstig zu realisieren, Passungsrost wird vermieden und der Vorspannung dienende Federn zwischen Motorgehäuse und Lager werden nicht zusätzlich in Drehung versetzt. Insgesamt reduziert sich dadurch die Wartungsanfälligkeit der Maschine, denn der Lagersitz wird bei thermischen Ausdehnungen oder axialen Verschiebungen geschont.

Vorzugsweise umfasst die Arretierung ein Material hoher Korrosionsbeständigkeit, insbesondere Messing-oder Edelstahl, und das Zwischenlager ist mittels einer Kunststoffbuchse am Motor angeordnet. Aufgrund der bevorzugten Verwendung von korrosionsbeständigen Materialien oder Legierungen für die Arretierung, speziell Messing oder Edelstahl, und aufgrund des bevorzugten Einsatzes einer Kunststofflagerbuchse, vorzugsweise eines Polymer-Gleitlagers, wird eine Reaktion der betroffenen Materialoberflächen mit dem Umgebungsmedium (Luft, Schmiermitteln, Wasser, etc.) vorgebeugt und somit Passungsrost und vorzeitiger Verschleiß vermieden. Der grundlegende Gedanke ist dabei eine Paarung von nicht korrosionsbeständigen Materialen zu vermeiden.

Vorzugsweise ist die Arretierung in Umlaufrichtung mittels einer mechanischen Führung parallel zur Rotationsachse realisiert. Die Führung in axialer Richtung bewirkt automatisch eine Drehhemmung.

Besonders bevorzugt ist die Führung mittels einer Bohrung am Zwischenlager und einer Bohrung am Gehäuse realisiert, wobei mittels eines in diese Bohrungen eingefügten Stiftes die Drehhemmung erfolgt, während die axiale Bewegung möglich ist.

Alternativ zur zuvor erwähnten Lösung ist die Arretierung mittels einer vorzugsweise formschlüssigen Verzahnung realisiert, welche sowohl am Gehäuse als auch am Zwischenlager angeordnet ist und eine axiale Bewegungsfreiheit gewährleistet. Die Verzahnung kann auch stirnseitig am Zwischenlagerring angeordnet sein oder außen an der Oberfläche des Zwischenlagerringes (Außenverzahnung). An den jeweils gegenüberliegenden Flächen der Gehäuseaussparung, welche das Lager aufnimmt, wäre dann eine korrespondierende Verzahnung anzuordnen.

Die Vorteile der erfindungsgemäßen Lösung kommen insbesondere auch bei der Montage der Maschine zum Tragen. Der erfindungsgemäße Direktantrieb in Form eines Hohlwellenmotors treibt mittels des Hohlwellenrotors die Maschinenwelle an und bildet in Verbindung mit der Maschinenwelle (z.B. Druckmaschinenzylinder) einen steifen Verbund. Die Maschine ist aus den zuvor genannten Gründen gegenüber herkömmlichen Maschinen mit aus dem Stand der Technik bekannten Direktantrieben ausfallssicherer, robuster und preiswerter.

Im folgenden wird nun die Montage des Motors im Detail beschrieben. Zur Montage eines erfindungsgemäßen Hohlwellenmotors wird in einem ersten Montageschritt der radial fixierte Hohlwellenrotor an der Welle des Druckmaschinenzylinders befestigt und in einem zweiten Montageschritt das Motorgehäuse in axialer Richtung zur Maschinenwandung hin bewegt, wobei das Motorgehäuse mittels des im Rahmen des ersten Schrittes an der Welle befestigten Hohlwellenrotors geführt wird und wobei in einem dritten Montageschritt das Motorgehäuse selbst an der Maschine befestigt wird. Während des ersten Montageschrittes bleibt die Hohlwelle des Motors unverändert in Transportstellung fest mittels der Ausnehmung am Anschlussflansch fixiert. Aufgrund der Toleranzen ist es jedoch möglich, das Motorgehäuse geführt durch die Motorhohlwelle sowohl in axialer als auch in Rotationsrichtung zu bewegen.

Diese Bewegungsfreiheit wird vorteilhaft dazu verwendet, dass während des zweiten Montageschrittes das Motorgehäuse an der Maschine justiert werden kann. Bei dieser Bewegung dient der Hohlwellenrotor als Führung für das Motorgehäuse. Da der Hohlwellenrotor bereits mit der Maschinenwelle fest verbunden ist, ist dieser automatisch fixiert und gelagert. In einem letzten Schritt wird das Motorgehäuse mit einer Wandung der Maschine fest verbunden. Das Motorgehäuse und die Wandung sowie der Rotor und die Maschinenwelle sind damit steif miteinander verbunden. Die Welle des Druckmaschinenzylinders bildet in Verbindung mit der Motorwelle eine durchgehende umlaufende und längsverstellbare Welle, die mittels zumindest zweier Lagermittel gelagert ist. Ein Lagermittel befindet sich innerhalb des Motorgehäuses/Motorflansches und ein weiteres Lagermittel befindet sich innerhalb des Maschinengehäuses/der Maschinenwandung. Einer Überbestimmung hinsichtlich der Rotorlagerung bezüglich radialer Kräfte kann hierdurch vorgebeugt werden.

Damit die Bohrungen im Motorgehäuse mit den Bohrungen an der Maschinenwandung fluchten, wird es gegebenenfalls erforderlich werden, den Hohlwellenrotor oder das Motorgehäuse/Motorflansch um die Hohlwellenrotorachse während der Montage zu drehen. Aufgrund der bereits zuvor erwähnten Bemessungen der Toleranzen der Arretierung ist dies ohne weiteres und vor allem ohne die Verwendung mechanischer Hilfsmittel/teurer Spezialwerkzeuge möglich.

Die Demontage des Hohlwellenmotors erfolgt sinngemäß in umgekehrter Reihenfolge. In einem ersten Demontageschritt wird das Motorgehäuse von der Maschinenwandung gelöst und in einem zweiten Demontageschritt wird das Motorgehäuse in axialer Richtung von der Maschine weg bewegt. Die Führung erfolgt auch hier mittels des Hohlwellenrotors, welcher nach wie vor unverändert mit der Maschinenwelle verbunden ist. Die axiale Bewegung muss so lange erfolgen, bis der Hohlwellenrotor innerhalb des Motorgehäuses mittels der Arretierung radial fixiert ist. Im Rahmen eines dritten Demontageschrittes wird der radial fixierte Hohlwellenrotor mittels der von außen zugänglichen Öffnungen der Hohlwelle von der Maschinenwelle gelöst und die gesamte Anordnung von der Maschine abgenommen. Die Rotorwelle ist damit automatisch wieder für Transportzwecke fixiert, so dass der Direktantrieb, beispielsweise zu Reparaturzwecken oder zu Lagerzwecken, sicher bewegt werden kann. Die Arretierung verhindert, dass die Hohlwelle innerhalb des Motorgehäuses eine radial Bewegungsänderung erfährt, welche den Luftspalt derart reduzieren könnte, dass die an der Rotorwelle angeordneten Permanentenmagnete am Stator aufschlagen und beschädigt werden könnten.

Nachfolgend werden anhand einiger Zeichnungen mögliche Ausführungsformen der erfindungsgemäßen Maschinen schematisch erläutert. Es handelt sich dabei lediglich um Beispiele. Fachmännische Abwandlungen mit identischer Wirkung sind jederzeit denkbar.
Figur 1 zeigt eine Druckmaschine mit erfindungsgemäßem Direktantrieb.
Figur 2 zeigt das erfindungsgemäße Loslager im Detail.
Figur 3 zeigt den Direktantrieb von einer Maschine losgelöst im Längsschnitt.
Figur 4 zeigt den ersten Montageschritt (Montage des Hohlwellenrotors an der Welle irgendeiner Maschine, z.B. auch Spritzgießmaschine).
Figur 5 zeigt einen weiteren Montageschritt (Montage des Motorgehäuses an der Wandung irgendeiner Maschine, z.B. auch Spritzgießmaschine).

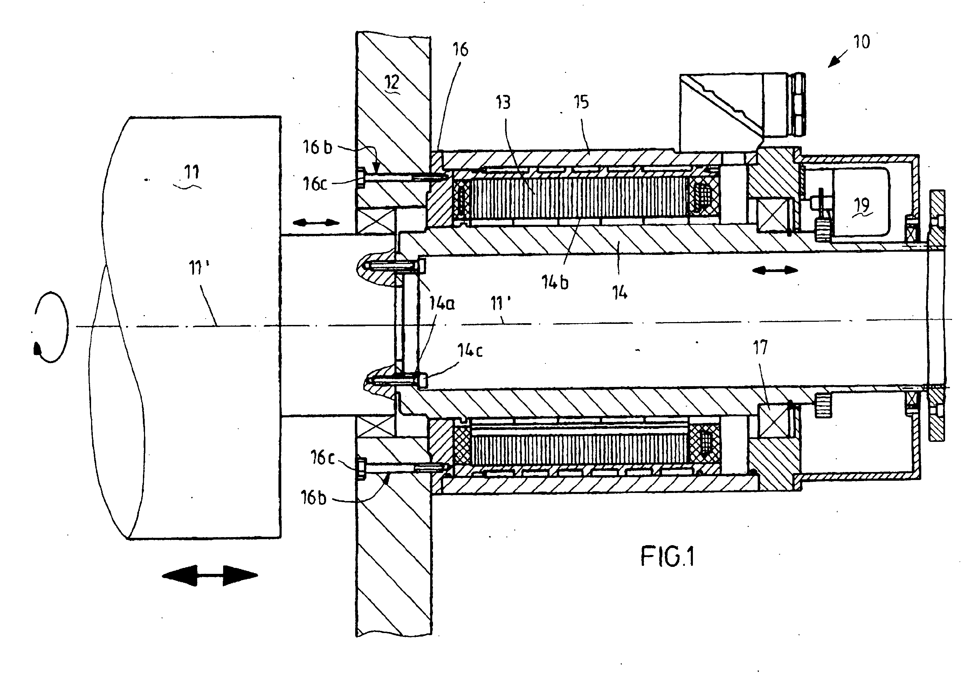

In .Figur 1 ist eine Druckmaschine mit erfindungsgemäßem Direktantrieb 10 gezeigt. Von der Druckmaschine ist nur ein Ausschnitt dargestellt, welcher eine Wandung 12 der Maschine zur Befestigung des Motorgehäuses 15 und einen Druckmaschinenzylinderabschnitt 11 zeigt, welcher vom Hohlwellenrotor 14 des Direktantriebs 10 angetrieben werden kann. Der Holwellenrotor 14 wiederum umfasst maschinenseitig Bohrungen 14A zur Befestigung der Hohlwelle 14 an der motorseitigen Stirnseite der Welle des Druckmaschinenzylinders 11 mittels Befestigungsmitteln 14C. Die Hohlwelle 14 trägt an ihrer Oberfläche Permanentmagnete 14B. Konzentrisch um die Hohlwelle 14 ist ein Stator 13 angeordnet, welcher mittels eines Luftspaltes von den Permanentmagneten 14B beabstandet ist. Diesen Luftspalt gilt es unter allen Bedingungen aufrecht zu halten, um Beschädigungen des Direktantriebs 10 vorzubeugen. Diese Aussage gilt sowohl für den Transport, als auch während des Betriebes der erfindungsgemäßen Druckmaschine. Die Hohlwelle 14 und der Stator 13 sind innerhalb des Motorgehäuses 15 angeordnet, wobei das Motorgehäuse 15 maschinenseitig mittels des Flansches 16 zumindest teilweise abgedeckt ist. Der Flansch 16 umfasst eine Ausnehmung, welche derart ausgebildet ist, dass die Hohlwelle 14 maschinenseitig aus dem Motorgehäuse 15 herausragen kann. Das Flansch 16 umfasst ebenfalls Befestigungsmittel 16B, beispielsweise Bohrungen mit Gewinde zur Aufnahme von Schrauben 16C oder dergleichen, mittels derer das Motorgehäuse 15 an einer Wandung 12 der Druckmaschine fest angeordnet werden kann. Die Hohlwelle 14 ist an der dem Flansch 16 gegenüberliegenden Seite des Motorgehäuses 15 mittels eines Loslagers 17 drehbar und axial verschiebbar gelagert. Zur Realisierung von Ausgleichbewegungen während des Druckvorganges ist der Druckmaschinenzylinder 11 axial verschiebbar an einer Wandung 12 der Maschine gelagert. Eine axiale Verschiebung des Druckmaschinenzylinders 11 (z.B. Rasterwalze) bewirkt aufgrund der steifen Kopplung mit dem Hohlwellenrotor 14 ebenfalls eine axiale Verschiebung des Hohlwellenrotors 14 gegenüber dem Stator 13 entlang der Rotorachse 11'. Die Lagerung des Hohlwellenrotors ,14 ist derart realisiert, dass eine solche axiale Bewegung möglich ist. Die Erfindung hat den Vorteil, dass Taumelbewegungen am Wellenende reduziert bzw. vermieden werden können. Somit können preiswerte Standardsignälgeber 19 anstelle von teuren Speziallösungen bei der Realisierung eines Direktantriebs für die anzutreibende Druckmaschinenwelle 11 verwendet werden.

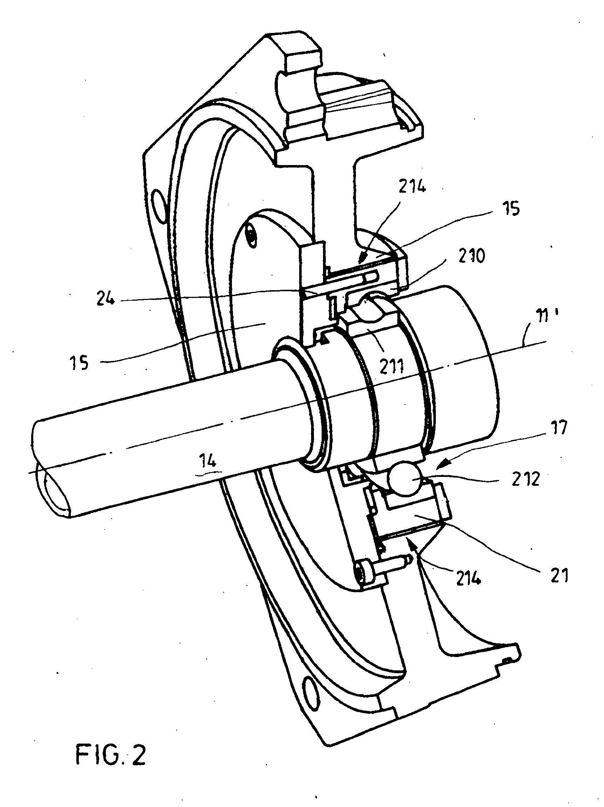

Figur 2 stellt das aus den anderen Figuren bekannte Loslager 17 grob schematisch dar. Das Lager 17 selbst umfasst im wesentlichen drei mechanische Komponenten 210, 211, 212. Das mehrteilige Loslager 17 ist hier in einen Motorflansch eingelassen. Die Hohlwelle 14 wird vom Loslager 17 radial im Flansch abgestützt und das Loslager 17 wird mittels eines Zwischenlagers 21 im Lagersitz 214 des Flansches vorzugsweise unter Verwendung einer Gleitlagerbuchse als Zwischenlager 21 montiert. Die (Polymer-) Gleitlagerbuchse 21 ist vorzugsweise in den Lagersitz 214 am Flansch eingepresst, wodurch die Bildung von Passungsrost unterbunden werden kann. Die Komponenten 210, 211, 212 bilden ein Loslager 17, dessen Innenring 211 auf der Hohlwelle 14 drehfest sitzt und dessen Außenring 210 im Zwischenlager 21 drehfest sitzt. Um eine Relativbewegung zwischen Zwischenlager 21 und Lagersitz 214 zu hemmen, ist ein Arretierungsmittel 24 vorgesehen. Zusätzlich kann ein Vorsprung vorgesehen sein, welcher vom Zwischenlager umfasst sein kann und als Anlagefläche für eine Vorspannfeder dienen kann.

In der erfindungsgemäßen Anwendung-in Verbindung mit einer Druckmaschine, wo die mit dem Druckmaschinenzylinder 11 verbundene Hohlwelle 14 mit ihrer Drehachse 11' direkt oder mittels einer sehr steifen Kupplung mechanisch verbunden ist, kann es vorkommen, dass die auf die Hohlwelle 14 übertragene Last nicht stationär bzw. punktförmig ist, sondern umlaufend auf alle Lagerkomponenten wirkt. Die umlaufende Last verursacht eine Kraft, die zwangsläufig irgendwo in der Mechanik aufgenommen werden muss, wobei das Motorlager bzw. der Lagersitz 214 sich in den meisten Fällen als die erste mechanische "Schwachstelle" herausstellt. Das durch die umlaufende Last generierte Drehmoment wird auf das Lager 210, 211, 212 bzw. dessen Außenring 210 übertragen. Wenn das Drehmoment die Haftreibungsschwelle zwischen dem Außenring 210 des Loslagers 17 und dem Lagersitz 214 überschreitet, dreht sich der Außenring 210 üblicherweise relativ zum Gehäuse/Flansch 15 mit. Die hier gezeigt Lösung verhindert dieses Mitdrehen und schont daher den Lagersitz 214, ohne dass ein Festlager benötigt wird. Das hier gezeigte Loslager 17 wirkt bezüglich radial auftretender Lasten wie ein Festlager und vereint die damit verbundenen Vorteile.

Vorspannfedern werden aufgrund der hier gezeigten Lösung nicht in Rotation versetzt, was zusätzliche Materialbelastungen vermeidet und die Lebensdauer der Federn erhöht. Dies hat für den Druckmaschinenbauer den Vorteil, dass keine Änderungen an der Mechanik vorgenommen werden müssen. Für den Motorhersteller entsteht außerdem der Vorteil, dass Standard-Komponenten (z.B. preiswerte Wälzlager, Kugellager) verwendet werden können. Außerdem werden keine speziellen Werkzeuge oder Fertigungsprozesse benötigt, d.h. zusätzliche Herstellungskosten sind minimal und auf ohnehin im Maschinenbau übliche Arbeitsvorgänge beschränkt.

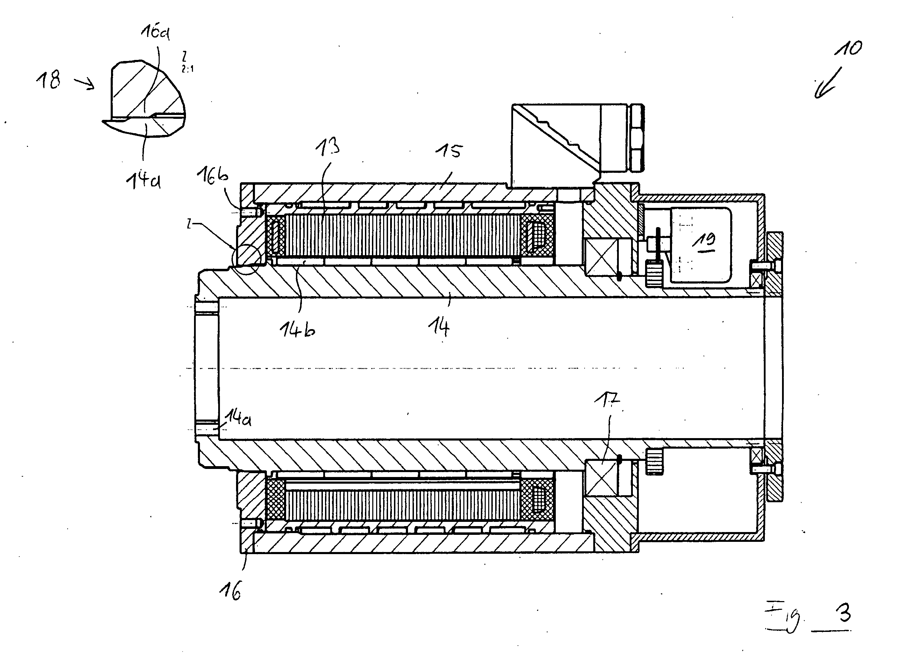

Figur 3 zeigt den Direktantrieb 10 der Druckmaschine nochmals im Schnitt und losgelöst von der Druckmaschine. Die Komponenten des Motors 10 wurden bereits im vorhergehenden Abschnitt beschrieben. Nachfolgend wird auf das Detail Z näher eingegangen. Die Detailzeichnung Z zeigt den konstruktiven Aufbau des zweiten Lagermittels 18 detaillierter. Das zweite Lagermittel 18 ist an der ersten Abdeckung 16 und an der Hohlwelle 14 realisiert. Hierzu wird die erste Abdeckung 16 mit einer zentralen Ausnehmung (z.B. Bohrung) versehen. Diese Ausnehmung wird im Rahmen der hier gewählten Realisierungsform derart geformt, dass sich der Bohrungsdurchmesser von der Innenseite des Motorgehäuses 15 aus betrachtet zur Außenseite hin sukzessive verringert. Hierdurch entsteht eine nahezu konische Querschnittsform dieser Ausnehmung. Es ist auch möglich, diese Querschnittsform mittels stufenförmiger Verläufe 16A zu realisieren, indem beispielsweise zunächst eine durchgehende zentrale Bohrung an der Abdeckung eingebracht wird und anschließend eine Sacklochbohrung mit erhöhtem Bohrungsdurchmesser ebenfalls zentral eingebracht wird. Der Übergang von der ersten zur zweiten Bohrung wird mittels einer Abflachung derart gestaltet, dass ein nahezu stufenloser Übergang von der ersten zur zweiten Bohrung realisiert ist. Die zweite Komponente des Lagermittels 18 besteht weiterhin aus einem veränderten Durchmesser der Hohlwelle 14 an einem Hohlwellenende. Hierbei wird genau umgekehrt wie zuvor beschrieben verfahren. Der Durchmesser der Hohlwelle 14 wird an dem der Druckmaschinenwelle (siehe Figur 1) zugewandten Hohlwellenende 14 derart reduziert, dass ebenfalls ein stufenförmiger oder konischer Übergang 14A entsteht.

Die im Detail Z gezeigten Durchmesserveränderungen 16A und 14A bewirken, dass der Hohlwellenrotor 14 in radialer Richtung betrachtet mittels axialer Verschiebung relativ zur Ausnehmung mittels der Ausnehmung leicht zentrierbar und längsverstellbar bleibt. Die axiale Verschiebbarkeit wird aufgrund der Verwendung des Loslagers 17 am gegenüberliegenden Ende der Hohlwelle 14 ermöglicht.

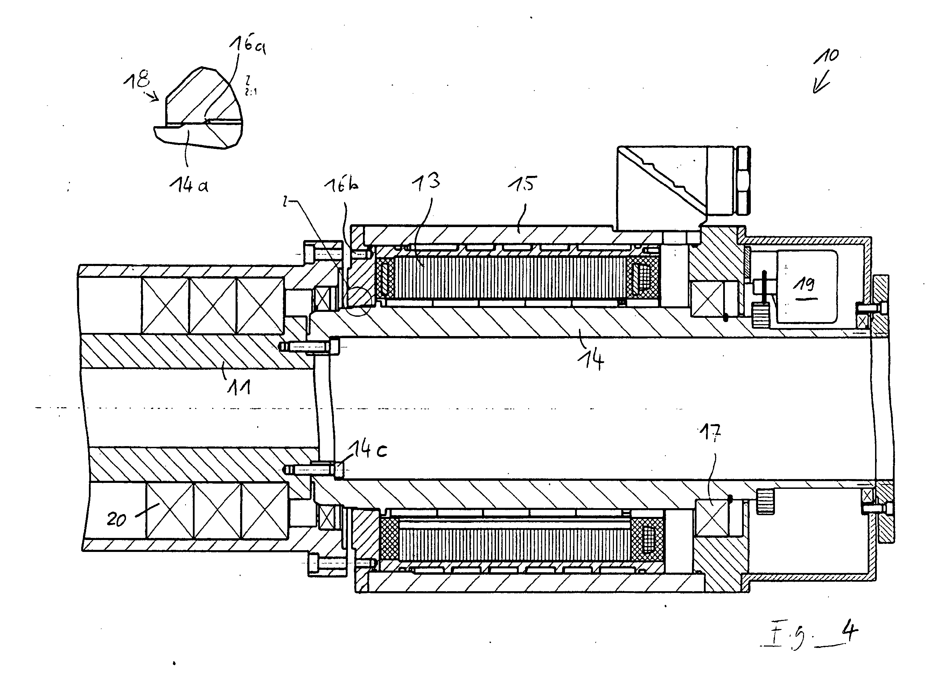

Figur 4 zeigt die an irgendeine Maschinenwelle 11 vormontierte erfindungsgemäße Vorrichtung. Der Hohlwellenrotor 14 ist in dieser Darstellung am Motorgehäuse 15 fixiert (siehe ineinandergreifende Vorsprünge 16A, 14A im Detail Z). Die Offenbarungen bezüglich des Details Z im Rahmen der Beschreibung zu Figur 2 gelten auch hier. Es wird auf die entsprechenden Stellen der Beschreibung verwiesen. Der einzige Unterschied zu der in Figur 2 gezeigten Anordnung liegt darin, dass der am Motorgehäuse 15 radial fixierte Hohlwellenrotor 14 nun an einer Maschinenwelle befestigt ist. Diese Befestigung erfolgt mittels der Befestigungsmittel 14C; welche beispielsweise Schrauben 14C sein könnten. Die Schrauben 14C wurden durch Bohrungen an der maschinenseitigen Stirnseite der Hohlwelle 14 geführt und in mit Gewinden versehenen Sacklochbohrungen an der Stirnseite der Maschinenwelle 11 eingeschraubt. Die Hohlwelle 14 des Hohlwellenmotors 10 ist nun mit der Maschinenwelle 11 steif über die Befestigungsmittel 14C verbunden. Wie aus der Figur 4 deutlich wird, wurde jedoch das Motorgehäuse 15 noch nicht an das Maschinengehäuse 12 angefügt bzw. dort verschraubt. Es ist der zwischen dem Anschlussflansch 16 des Motorgehäuses 15 und der Wandung des Maschinengehäuses noch vorhandene Luftspalt deutlich zu sehen.

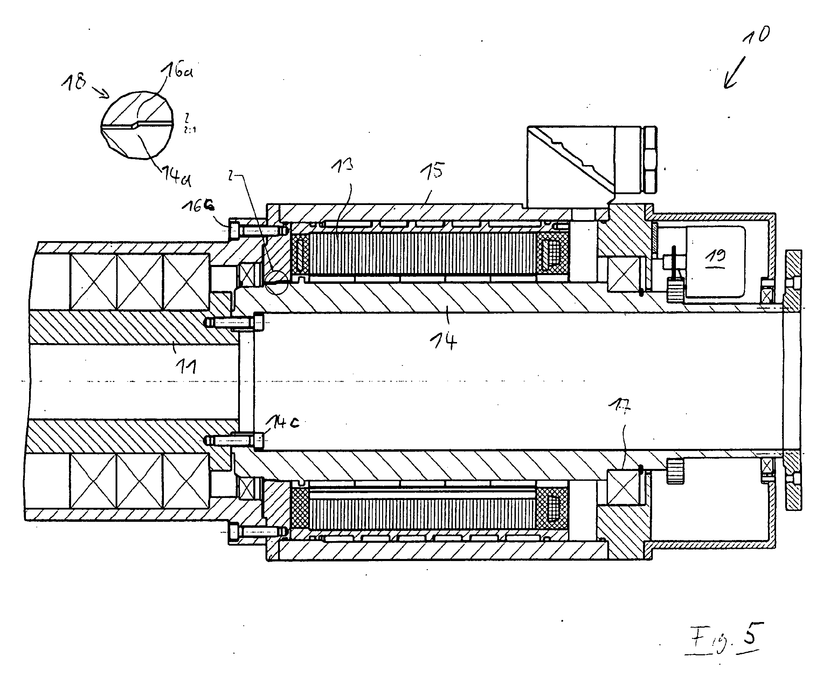

Figur 5 zeigt die erfindungsgemäße elektrische Maschine 10 im fertig montierten Zustand. Die im Detail Z dargestellte Zentrierung wurde mittlerweile durch axiale Verschiebung des Motorgehäuses 15 in Richtung der Maschine entlang der Hohlwelle 14 gelöst und das Motorgehäuse 15 wurde an die Wandung 12 der Maschine angepresst und mittels Verschraubungen 16C steif mit dem Maschinengehäuse 12 verschraubt. Wie aus Detail Z deutlich sichtbar wird, wurden die Stufen 16A und 14A gegeneinander verschoben, wodurch die in Figur 4 gezeigte Arretierung gelöst wurde, so dass nun der Hohlwellenrotor 14 frei drehbar aufgrund oder steifen Kopplung mit der Maschinenwelle 11 mittels des maschinenseitigen Lagers 20 und des motorseitigen Lagers 17 gelagert ist. Das zweite Lagermittel 18 des Motors hat in dieser Betriebsart keinerlei Funktion mehr, da die erlaubte Längsverstellung während des Betriebes der Druckmaschine kleiner ist als diejenige Längsverstellung der Achse, welche zu einer Arretierung der Achse mittels des zweiten Lagermittels 18 führen könnte. Das zweite Lagermittel 18 dient in erster Linie als Lager während des Transports oder der Erleichterung der Montage der erfindungsgemäßen Anordnung.

Zum Lösen des Direktantriebs 10 von der Maschine sind die bereits beschriebenen Verfahrensschritte in umgekehrter Reihenfolge anzuwenden. Insbesondere muss die Verschraubung 16B gelöst werden, wobei anschließend das Gehäuse 15 in axialer Richtung geführt mittels der Hohlwelle 14 von der Maschine abgezogen wird, bis die Arretierung 18 greift. Anschließend wird die Verschraubung 14C ,der Hohlwelle 14 gelöst und der Motor 10 kann von der Maschine komplett abgenommen werden. Die Hohlwelle 14 wird aufgrund der axialen Verschiebung mittels des Lagers 18 automatisch zentriert und für einen sicheren Abtransport des Motors 10 fixiert.

## Patentansprüche

1. Maschine, insbesondere Druckmaschine, mit einer Wandung (12) und wenigstens einem Drehkörper (11), welcher Drehkörper (11) entlang seiner Drehachse (11') relativ zur Wandung (12) längsverstellbar ist, wobei ein Mittel (10) zur Realisierung eines direkten elektrischen Antriebes für den Drehkörper (11) vorgesehen ist,
**dadurch gekennzeichnet, dass**
das Mittel (10) ein elektrischer Motor mit einem als Hohlwelle ausgebildeten Rotor (14) ist, wobei der Rotor (14) des Motors mit dem Drehkörper (11) drehsteif verbunden ist, so dass sich eine gemeinsame Drehachse (11') ergibt, und wobei das Motorgehäuse (15) an der Wandung (12) der Maschine angeordnet ist und wobei der Rotor (14) mittels eines Loslagers (17) am Motorgehäuse (15) gelagert ist, so dass der Drehkörper (11) und der Rotor (14) gleichzeitig längsverstellbar sind.

2. Maschine gemäß Anspruch 1, wobei zusätzlich ein Stator (13) umfasst ist, wobei der Hohlwellenrotor (14) und der Stator (13) koaxial zur Drehachse (11') zumindest teilweise innerhalb des Motorgehäuses (15) angeordnet sind und wobei das Motorgehäuse (15) mittels einer als Anschlussflansch ausgebildeten ersten Motorgehäuseabdeckung (16) an der Wandung (12) angeordnet ist.

3. Maschine gemäß Anspruch 2, wobei ein erstes Lagermittel (17) zur Realisierung einer Drehung des Hohlwellenrotors (14) um die Drehachse (11') an der dem Anschlussflansch (16) im wesentlichen gegenüberliegenden Seite des Motors (10) angeordnet ist.

4. Maschine gemäß Anspruch 2 oder 3, wobei am Anschlussflansch (16) eine zentrale Ausnehmung vorgesehen ist, wobei die Ausnehmung und/oder der Hohlwellenrotor (14) Mittel (Z, 14A, 16A) umfasst, welche ein zweites Lagermittel (Z,18) zur Arretierung des Hohlwellenrotors (14) am Motorgehäuse (15) bilden können, welches Lagermittel (Z,18) derart ausgebildet ist, dass der Hohlwellenrotor (14) in radialer Richtung mittels axialer Verschiebung innerhalb der Ausnehmung längsverstellbar bleibt.

5. Maschine gemäß Anspruch 4, wobei die Mittel (Z, 14A, 16A) zur Realisierung des zweiten Lagermittels (Z,18) Führungsmittel sind, welche eine mechanischen Führung bilden, wobei die Führungsmittel zur Realisierung der Führung am Hohlwellenrotor (14) und/oder an der Ausnehmung des Anschlussflansches (16) derart angeordnet sind, dass diese im Sinne einer axialen Führung und radialen Arretierung, welche bei axialer Bewegung des Hohlwellenrotors greifen kann, zusammenwirken.

6. Maschine gemäß einem der vorhergehenden Ansprüche 4 bis 6, wobei der Durchmesser des Hohlwellenrotors (14) im Bereich des zweiten Lagermittels (Z, 18) mit einer zumindest teilweise umlaufenden und konisch verlaufenden Durchmessererweiterung (Z, 14A) und der Ausnehmungsdurchmesser mit einer zumindest teilweise umlaufenden und konisch verlaufenden Durchmesserreduzierung (Z, 16A) versehen ist.

7. Maschine gemäß Anspruch 6, wobei die Durchmessererweiterung (Z, 14A) und die Durchmesserreduzierung (Z, 16A) derart realisiert sind, dass bei Längsverstellung des Hohlwellenrotors in Richtung des Anschlussflansches (16) eine Fixierung des Hohlwellenrotors (14) in radialer Richtung realisierbar ist, wobei die Toleranzen derart bemessen sind, dass der Hohlwellenrotor (14) auch bei Fixierung ohne mechanische Hilfsmittel beweglich bleibt.

8. Maschine gemäß einem der vorhergehenden Ansprüche 2 bis 7, wobei der Anschlussflansch (16) Befestigungsmittel (16B) umfasst, welche von Seiten der Wandung (12) und/oder von Seiten des Motorgehäuses (15) zugänglich sind und mittels welcher der Motor an der Wandung (12) angeordnet ist.

9. Maschine gemäß einem der vorhergehenden Ansprüche, wobei der Hohlwellenrotor (14) Befestigungsmittel (14C) zur Befestigung des Hohlwellenrotors (14) an dem Drehkörper (11) umfasst, wobei die Befestigungsmittel (14C) von der dem Drehkörper (11) abgewandten Seite des Hohlwellenrotors (14), insbesondere mittels einer koaxialen und/oder rohrförmigen Öffnung am Hohlwellenrotor (14), zugänglich sind und wobei der Hohlwellenrotor (14) mittels dieser Befestigungsmittel (14C) an dem Drehkörper (11) angeordnet ist.

10. Maschine gemäß Anspruch 3 bis 9, wobei das erste Lagermittel (17) für den Hohlwellenrotor (14) als Loslager realisiert ist, mit einem Aussenring (210), der in einem Zwischenlager (21) drehfest lagert, wobei das Zwischenlager (21) in einem Einbauraum des Motorgehäuses (15) oder eines vom Motorgehäuse (15) umfassten Motorflansches angeordnet ist, und mit einem Innenring (211), welcher mit dem Hohlwellenrotor (14) drehfest verbunden ist, wobei eine Arretierung (24) umfasst ist, welche eine Relativbewegung in Umlaufrichtung zwischen Motor (15) bzw. Motorflansch und Zwischenlager (21) hemmt und eine Relativbewegung zwischen Motor (15) bzw. Motorflansch und Zwischenlager (21) entlang der Drehachse (11') der Hohlwelle (14) zulässt.

11. Maschine gemäß Anspruch 10, wobei die Arretierung (24) ein Material hoher Korrosionsbeständigkeit, insbesondere Messing oder Edelstahl, umfasst, und wobei das Zwischenlager (21) mittels einer Kunststoffbuchse (214) am Motor (15) bzw. Motorflansch angeordnet ist.

12. Maschine gemäß einem der Ansprüche 10 oder 11, wobei die Arretierung (24) mittels zumindest einer mechanischen und zur Drehachse (11') im wesentlichen parallel verlaufenden Führung realisiert ist.

13. Maschine gemäß Anspruch 12, wobei die Führung mittels zumindest einer Bohrung am Zwischenlager (21) und zumindest einer Bohrung am Motor (15) bzw. Motorflansch sowie mittels eines in diese Bohrungen einführbaren Stiftes (24) realisiert ist.

14. Maschine gemäß einem der Ansprüche 10 bis 12, wobei die Arretierung (24) mittels einer formschlüssigen Verzahnung (nicht gezeigt) realisiert ist, welche sowohl am Motor (15) bzw. Motorflansch, als auch am Zwischenlager (21) angeordnet ist.

## Claims

1. Machine, in particular printing press, having a wall (12) and at least one rotational body (11), which rotational body (11) can be adjusted longitudinally along its rotational axis (11') relative to the wall (12), a means (10) being provided for realizing a direct electric drive for the rotational body (11), **characterized in that** the means (10) is an electric motor with a rotor (14) which is configured as a hollow shaft, the rotor (14) of the motor being connected in a rotationally rigid manner to the rotational body (11), which results in a common rotational axis (11'), and the motor housing (15) being arranged on the wall (12) of the machine, and the rotor (14) being mounted by means of a floating bearing (17) on the motor housing (15), with the result that the rotational body (11) and the rotor (14) can be adjusted longitudinally at the same time.

2. Machine according to Claim 1, a stator (13) additionally being comprised, the hollow rotor motor (14) and the stator (13) being arranged coaxially with respect to the rotational axis (11') at least partially within the motor housing (15), and the motor housing (15) being arranged on the wall (12) by means of a motor-housing covering (16) which is configured as a connecting flange.

3. Machine according to Claim 2, a first bearing means (17) for realizing a rotation of the hollow shaft rotor (14) about the rotational axis (11') being arranged on that side of the motor (10) which lies substantially opposite the connecting flange (16).

4. Machine according to Claim 2 or 3, a central recess being provided on the connecting flange (16), the recess and/or the hollow shaft rotor (14) comprising means (Z, 14A, 16A) which can form a second bearing means (Z, 18) for locking the hollow shaft motor (14) on the motor housing (15), which bearing means (Z, 18) is configured in such a way that the hollow shaft rotor (14) remains longitudinally adjustable in the radial direction by means of axial displacement within the recess.

5. Machine according to Claim 4, the means (Z, 14A, 16A) for realizing the second bearing means (Z, 18) being guide means which form a mechanical guide, the guide means for realizing the guide being arranged on the hollow shaft rotor (14) and/or on the recess of the connecting flange (16) in such a way that they interact in the sense of an axial guide and radial locking which can act upon axial movement of the hollow shaft rotor.

6. Machine according to one of the preceding Claims 4 to 6, the diameter of the hollow shaft rotor (14) being provided in the region of the second bearing means (Z, 18) with an at least partially circumferential and conically running widened diameter portion (Z, 14A), and the recess diameter being provided with an at least partially circumferential and conically running reduced diameter portion (Z, 16A).

7. Machine according to Claim 6, the widened diameter portion (Z, 14A) and the reduced diameter portion (Z, 16A) being realized in such a way that, upon longitudinal adjustment of the hollow shaft rotor in the direction of the connecting flange (16), fixing of the hollow shaft rotor (14) can be realized in the radial direction, the tolerances being dimensioned in such a way that the hollow shaft rotor (14) remains movable without mechanical aids even in the case of fixing.

8. Machine according to one of the preceding Claims 2 to 7, the connecting flange (16) comprising fastening means (16B) which are accessible from the side of the wall (12) and/or from the side of the motor housing (15), and by means of which fastening means (16B) the motor is arranged on the wall (12).

9. Machine according to one of the preceding claims, the hollow shaft rotor (14) comprising fastening means (14C) for fastening the hollow shaft rotor (14) to the rotational body (11), the fastening means (14C) being accessible from that side of the hollow shaft rotor (14) which faces away from the rotational body (11), in particular by means of a coaxial and/or tubular opening on the hollow shaft rotor (14), and the hollow shaft rotor (14) being arranged on the rotational body (11) by means of said fastening means (14C).

10. Machine according to Claims 3 to 9, the first bearing means (17) for the hollow shaft rotor (14) being realized as a floating bearing, having an outer ring (210) which pivots in a rotationally fixed manner in an intermediate bearing (21), the intermediate bearing (21) being arranged in an installation space of the motor housing (15) or a motor flange which is comprised by the motor housing (15), and having an inner ring (211) which is connected fixedly to the hollow shaft rotor (14) so as to rotate with it, a locking means (24) being included which inhibits a relative movement in the circumferential direction between the motor (15) or motor flange and the intermediate bearing (21) and permits a relative movement between the motor (15) or motor flange and the intermediate bearing (21) along the rotational axis (11') of the hollow shaft (14).

11. Machine according to Claim 10, the locking means (24) comprising a material of high corrosion resistance, in particular brass or stainless steel, and the intermediate bearing (21) being arranged on the motor (15) or motor flange by means of a plastic bush (214).

12. Machine according to either of Claims 10 and 11, the locking means (24) being realized by means of at least one guide which is mechanical and runs substantially parallel to the rotational axis (11').

13. Machine according to Claim 12, the guide being realized by means of at least one bore on the intermediate bearing (21) and at least one bore on the motor (15) or motor flange and by means of a pin (24) which can be introduced into the said bores.

14. Machine according to one of Claims 10 to 12, the locking means (24) being realized by means of a positively locking toothing system (not shown) which is arranged both on the motor (15) or motor flange and on the intermediate bearing (21).

## Revendications

1. Machine, en particulier machine d'impression, comprenant une paroi (12) et au moins un corps rotatif (11), lequel corps rotatif (11) est réglable en longueur le long de son axe de rotation (11') par rapport à la paroi (12), un moyen (10) pour réaliser un entraînement électrique direct pour le corps rotatif (11) étant prévu,
**caractérisée en ce que**
le moyen (10) est un moteur électrique avec un rotor (14) réalisé sous forme d'arbre creux, le rotor (14) du moteur étant connecté de manière solidaire en rotation au corps rotatif (11), de telle sorte que l'on obtienne un axe de rotation commun (11'), et le boîtier de moteur (15) étant disposé sur la paroi (12) de la machine et le rotor (14) étant supporté au moyen d'un palier fou (17) sur le boîtier de moteur (15), de telle sorte que le corps rotatif (11) et le rotor (14) puissent être réglés en longueur simultanément.

2. Machine selon la revendication 1, un stator (13) étant en outre prévu, le rotor sous forme d'arbre creux (14) et le stator (13) étant disposés coaxialement par rapport à l'axe de rotation (11') au moins en partie à l'intérieur du boîtier de moteur (15) et le boîtier de moteur (15) étant disposé sur la paroi (12) au moyen d'un premier recouvrement de boîtier de moteur (16) réalisé sous forme de bride de raccordement.

3. Machine selon la revendication 2, un premier moyen de palier (17) pour réaliser une rotation du rotor sous forme d'arbre creux (14) autour de l'axe de rotation (11') étant disposé sur le côté du moteur (10) essentiellement opposé à la bride de raccordement (16).

4. Machine selon la revendication 2 ou 3, un évidement central étant prévu au niveau de la bride de raccordement (16), l'évidement et/ou le rotor sous forme d'arbre creux (14) présentant des moyens (Z, 14A, 16A) qui peuvent former un deuxième moyen de palier (Z, 18) pour bloquer le rotor sous forme d'arbre creux (14) sur le boîtier de moteur (15), lequel moyen de palier (Z, 18) est réalisé de telle sorte que le rotor sous forme d'arbre creux (14) reste réglable en longueur dans la direction radiale au moyen du déplacement axial à l'intérieur de l'évidement.

5. Machine selon la revendication 4, les moyens (Z, 14A, 16A) pour réaliser le deuxième moyen de palier (Z, 18) étant des moyens de guidage qui forment un guidage mécanique, les moyens de guidage étant disposés sur le rotor sous forme d'arbre creux (14) et/ou sur l'évidement de la bride de raccordement (16) pour réaliser le guidage de telle sorte que ceux-ci coopèrent dans le sens d'un guidage axial et d'un blocage radial qui peut effectuer un engagement lors d'un mouvement axial du rotor sous forme d'arbre creux.

6. Machine selon l'une quelconque des revendications précédentes 4 à 6, le diamètre du rotor sous forme d'arbre creux (14) dans la région du deuxième moyen de palier (Z, 18) étant muni d'un élargissement de diamètre (Z, 14A) au moins partiellement périphérique et s'étendant coniquement et le diamètre de l'évidement étant muni d'une réduction de diamètre (Z, 16A) au moins partiellement périphérique et s'étendant coniquement.

7. Machine selon la revendication 6, l'élargissement de diamètre (Z, 14A) et la réduction de diamètre (Z, 16A) étant réalisés de telle sorte que lors d'un réglage en longueur du rotor sous forme d'arbre creux dans la direction de la bride de raccordement (16), une fixation du rotor sous forme d'arbre creux (14) dans la direction radiale puisse être réalisée, les tolérances étant dimensionnées de telle sorte que le rotor sous forme d'arbre creux (14) reste mobile même lors de la fixation sans moyens auxiliaires mécaniques.

8. Machine selon l'une quelconque des revendications précédentes 2 à 7, la bride de raccordement (16) comprenant des moyens de fixation (16B) qui sont accessibles du côté de la paroi (12) et/ou du côté du boîtier de moteur (15) et au moyen desquels le moteur est disposé sur la paroi (12).

9. Machine selon l'une quelconque des revendications précédentes, le rotor sous forme d'arbre creux (14) comprenant des moyens de fixation (14C) pour la fixation du rotor sous forme d'arbre creux (14) sur le corps rotatif (11), les moyens de fixation (14C) étant accessibles depuis le côté du rotor sous forme d'arbre creux (14) opposé au corps rotatif (11), en particulier au moyen d'une ouverture coaxiale et/ou tubulaire au niveau du rotor sous forme d'arbre creux (14), et le rotor sous forme d'arbre creux (14) étant disposés au moyen de ces moyens de fixation (14C) sur le corps rotatif (11).

10. Machine selon les revendications 3 à 9, le premier moyen de palier (17) pour le rotor sous forme d'arbre creux (14) étant réalisé sous forme de palier fou, avec une bague extérieure (210), qui est montée de manière solidaire en rotation dans un palier intermédiaire (21), le palier intermédiaire (21) étant disposé dans un espace d'installation du boîtier de moteur (15) ou d'une bride de moteur entourée par le boîtier de moteur (15), et avec une bague intérieure (211), qui est connectée de manière solidaire en rotation au rotor sous forme d'arbre creux (14), un blocage (24) étant prévu, lequel empêche un mouvement relatif dans la direction périphérique entre le moteur (15), respectivement la bride de moteur, et le palier intermédiaire (21) et permet un mouvement relatif entre le moteur (15), respectivement la bride de moteur, et le palier intermédiaire (21) le long de l'axe de rotation (11') de l'arbre creux (14).

11. Machine selon la revendication 10, le blocage (24) comprenant un matériau de grande résistance à la corrosion, en particulier du laiton ou de l'acier spécial, et le palier intermédiaire (21) étant disposé au moyen d'une douille en plastique (214) sur le moteur (15), respectivement la bride de moteur.

12. Machine selon l'une quelconque des revendications 10 ou 11, le blocage (24) étant réalisé au moyen d'au moins un guidage mécanique s'étendant essentiellement parallèlement à l'axe de rotation (11').

13. Machine selon la revendication 12, le guidage étant réalisé au moyen d'au moins un alésage au niveau du palier intermédiaire (21) et d'au moins un alésage au niveau du moteur (15), respectivement de la bride de moteur, ainsi qu'au moyen d'une goupille (24) pouvant être introduite dans ces alésages.

14. Machine selon l'une quelconque des revendications 10 à 12, le blocage (24) étant réalisé au moyen d'une denture à engagement positif (non illustrée) qui est disposée à la fois sur le moteur (15), respectivement la bride de moteur, et sur le palier intermédiaire (21).
